# FASCICULE DE BREVET EUROPEEN

(11) **EP 2 159 144 B1**
(45) Date de publication et mention de la délivrance du brevet: **02.01.2013**
(21) Numéro de dépôt: 09075389.8
(22) Date de dépôt: 24.08.2009
(51) Int. Cl.: B62J 11/00, A01K 27/00

(54) **Dispositif pour relier la laisse d'un animal domestique à un véhicule à roue non motorisé**
Vorrichtung zur Verbindung einer Haustierleine an einem antrieblosen Radfahrzeug
Device to attach a pet leash to a non motorised wheeled vehicle

(30) Priorité: 28.08.2008 FR 0804738
(43) Date de publication de la demande: 03.03.2010
(73) Titulaire: Behe, Jean-Marc, 68740 Blodelsheim (FR)
(72) Inventeur: Behe, Jean-Marc, 68740 Blodelsheim (FR)
(74) Mandataire: Burkard, Thierry

(56) Documents cités:
- DE-A1- 10 334 566
- DE-U1-202008 001 215
- US-A1- 2005 022 752
- US-B1- 6 820 573

## Description

La présente invention concerne un dispositif permettant de relier la laisse d'un animal domestique à un véhicule à roue non motorisé.

Les amis des animaux sont également le plus souvent des amateurs de promenade qui cherchent à combiner le bien-être de leur animal de compagnie et une activité physique de plein air.

Il arrive ainsi fréquemment que l'on croise des personnes qui se promènent en bicyclette tout en tenant dans une main une laisse au bout de laquelle se trouve leur chien, maître et animal se promenant ainsi de concert.

Cette pratique, en dépit de son caractère ludique, n'est pas sans inconvénients ni dangers. En effet, il n'est pas forcément facile de maintenir la trajectoire de la bicyclette, notamment en cas d'imprévu, tout en tenant compte du parcours suivi par l'animal qui n'est pas forcément rectiligne ni conforme au centimètre près à ce que souhaiterait son maître. Les risques de chute sont donc non négligeables, avec les inconvénients que cela peut comporter tant pour le maître que pour l'animal ou les tiers.

Pour remédier à ces différents inconvénients, diverses solutions ont été proposées.

On connaît ainsi un dispositif qui est composé d'une laisse souple en plusieurs parties articulées, dont l'une des extrémités peut être reliée au collier de l'animal et dont l'autre extrémité est fixée à l'axe de la roue arrière d'une bicyclette.

Cette modalité n'est pas pleinement satisfaisante. En premier lieu, elle ne procure pas une distance de sécurité suffisante entre la bicyclette et l'animal. Compte tenu du point d'accrochage, une partie de la laisse souple peut parfaitement se replier et s'introduire dans des rayons de la roue, en cas de changement de direction imprévu du chien.

Ceci est donc source de danger et de risques de chutes.

En second lieu, le conducteur de la bicyclette ne peut pas en cas de besoin régler la distance entre lui même et l'animal, ce qui peut être gênant en cas d'urgence, par exemple s'il apparaît nécessaire de retenir l'animal temporairement. Tant le mode de fixation que la position extrêmement basse des moyens d'accrochage de la laisse à la bicyclette rendent impossible toute intervention rapide de la part du conducteur.

Un exemple de ce type est décrit dans le document US 2005 / 0022 752.

Le document US 4 134 364 décrit un dispositif qui est composé d'une barre rectiligne dont l'une des extrémités est fixée au cadre de la bicyclette et dont l'autre extrémité comporte une pièce tubulaire traversée par une ouverture prévue pour laisser passer une chaîne dont le dernier maillon engage un tenon vertical saillant à partir de la barre tubulaire rectiligne. Ce dispositif est peut être efficace dans la mesure où il ménage une distance de sécurité entre l'utilisateur et l'animal, mais il est néanmoins particulièrement complexe tant du point de vu de son montage que de son utilisation qui est par ailleurs restrictive. En effet, le dispositif n'est conçu que pour l'utilisation d'une laisse constituée d'une chaîne métallique et il n'autorise pas non plus un réglage rapide, notamment en mouvement.

Le document WO 2004 / 08 2372 décrit un autre dispositif qui est composé d'un élément tubulaire rigide relié par une de ses extrémités à un collier de fixation prévu pour être fixée sur le cadre d'une bicyclette ou d'un véhicule, et dont l'autre extrémité engage une laisse souple élastique comportant plusieurs segments rétractables, et reliée par son extrémité libre au collier d'un animal. Ce dispositif permet de maintenir une distance de sécurité entre la bicyclette et l'animal et il offre également la possibilité de dérouler ou enrouler une certaine distance de laisse, et donc d'adapter la longueur de laisse disponible à la distance effective séparant la bicyclette de l'animal. Ceci constitue certes un progrès par rapport aux autres dispositifs connus mais ne résout cependant pas l'ensemble des inconvénients signalés ci-dessus.

En premier lieu , le réglage de la distance entre le véhicule et l'animal est effectué ici indépendamment de toute intervention de l'utilisateur. Celui-ci ne peut donc pas immobiliser l'animal ou réduire la distance à une valeur déterminée en cas de besoin puisque l'enroulement et le déroulement se font par simple traction ou relâchement exercé sur les parties articulées de la laisse qui se trouve à l'intérieur de l'élément tubulaire rigide.

En second lieu, ce dispositif, tout comme ceux décrits plus haut, n'est pas universel. Il n'est pas utilisable indépendamment de la laisse avec laquelle il est conçu. Il ne s'agit donc pas d'un dispositif universel susceptible d'être adapté sur toutes bicyclettes et utilisable avec tous types de laisse.

La présente invention se propose de remédier aux inconvénients mentionnés ci-dessus en réalisant un dispositif à la fois simple d'utilisation, peu coûteux, adaptable sur tout type de véhicule à roue non motorisé, comme par exemple une bicyclette, mais également une poussette ou un chariot, et permettant de relier tout type de laisse, notamment à enrouleur indépendamment de ses dimensions ou caractéristiques volumiques, tout en autorisant une intervention immédiate et à tout moment de l'utilisateur pour adapter la distance de laisse disponible.

Dans ce but, le dispositif selon l'invention comporte un adaptateur permettant de relier rapidement tout type de laisse, et un élément tubulaire rigide définissant une distance de sécurité, pouvant être relié à l'adaptateur par une de ses extrémités et prévu pour être fixé par son autre extrémité à un support de fixation sur le véhicule, tels que définis dans la revendication 1.

L'invention sera mieux comprise en référence aux dessins annexés qui illustrent un mode de réalisation de l'invention et son utilisation avec une bicyclette, dans lesquels :
- la figure 1 est une vue d'ensemble du dispositif selon l'invention montrant l'adaptateur avec un enrouleur de laisse, relié à l'élément tubulaire rigide,
- la figure 2 est une vue en éclaté montrant les différentes pièces composant le dispositif selon l'invention,
- la figure 3 est une vue détail montrant le support de fixation du dispositif au cadre d'une bicyclette,
- la figure 4 est une vue représentant l'ensemble du dispositif monté sur une bicyclette, et
- la figure 5 est une vue d'ensemble montrant un cycliste promenant son chien au moyen d'une dispositif selon l'invention.

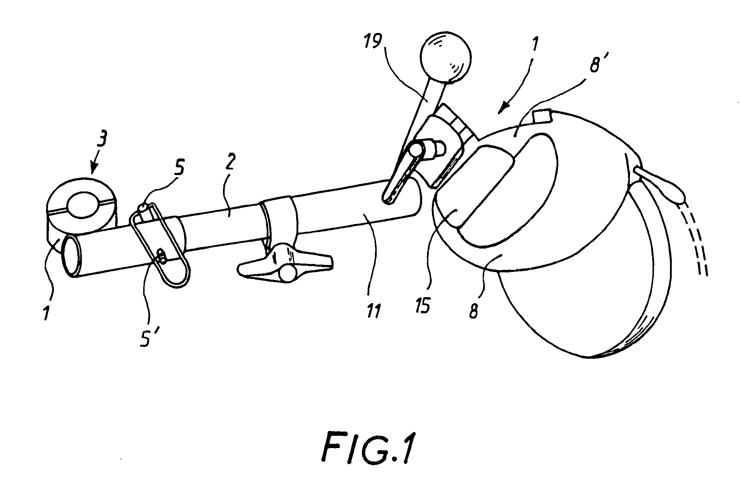

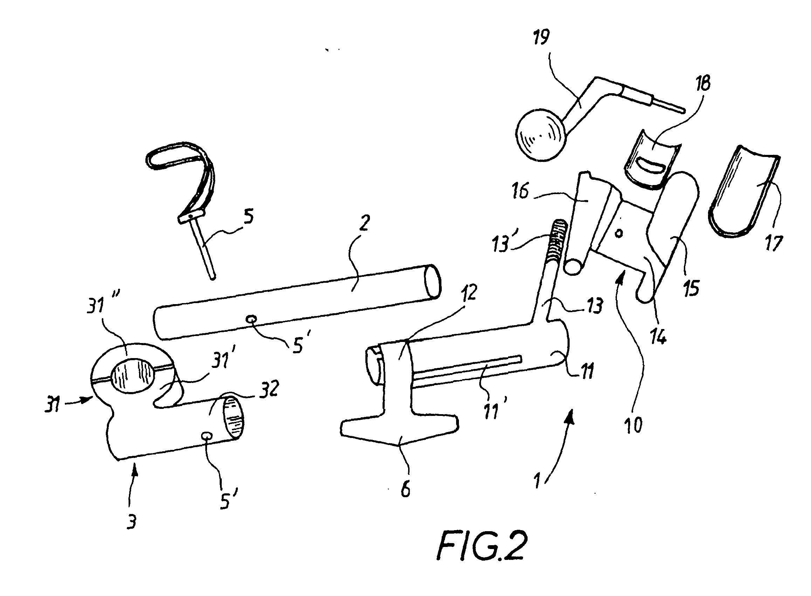

En référence aux figures annexées, et notamment les figures 1 et 2, le dispositif selon l'invention comporte un adaptateur (1) prévu pour recevoir la poignée (8') d'une laisse à enrouleur (8) et engagé sur une des extrémités d'une barre tubulaire (2), l'autre extrémité de la barre (2) engageant un support de fixation (3) monté sur le cadre d'une bicyclette.

L'adaptateur (1) est constitué d'une pièce tubulaire (11) comportant à son extrémité opposée à celle engageant la barre (2) une tige saillante (13) formant un angle d'environ 45° avec l'axe longitudinal de la pièce tubulaire (11), et dont l'extrémité libre présente un filetage (13').

Un ensemble de serrage est prévu pour être monté de manière libératoire à l'extrémité de la tige filetée (13').

L'ensemble de serrage est constitué d'un élément récepteur (10) avec une partie centrale définie par une plaque plane (14), dont l'une des extrémités se prolonge par un tube ouvert (16) doté d'un filetage intérieur correspondant au filetage extérieur (13') de la tige (13). L'extrémité opposée de la plaque (14) centrale est repliée pour former une gorge (15) en forme de U, pour engager la poignée (8') d'un enrouleur de laisse (8).

L'ensemble de serrage est complété par une pièce de protection (17), une pièce de maintien (18) et une pièce de fixation et de commande (19).

Pour assurer le maintien en place de la poignée (8') dans la gorge (15), on prévoit de manière classique une pièce de maintien (18) qui viendra se positionner sur le dessus de la poignée (8') une fois celle-ci engagée dans la gorge (15), l'ensemble étant bloqué en position grâce à une pièce de fixation (19) traversante comportant par ailleurs des moyens de commande, par exemple une poignée ou une tige à boule.

L'extrémité libre de la pièce tubulaire (11) est destinée à engager la barre tubulaire (2). A cet effet, elle présente un diamètre légèrement supérieur à celui de la barre centrale (2) pour là également autoriser un engagement par simple coulissement, et pourra avantageusement comporter des fentes longitudinales (11') destinée à procurer une certaine élasticité, pour en faciliter la mise en place sur la barre centrale (2). Des moyens d'accouplement/désaccouplement rapide sont prévus pour assurer le maintien en position, respectivement le retrait, de la pièce tubulaire (11) une fois celle-ci en place sur l'extrémité de la barre centrale (2), par exemple un collier de serrage (12) réglable au moyen d'une vis à papillon (6) ou de tout autre dispositif approprié.

La barre tubulaire (2) peut être réalisée en métal ou en tout autre matériau rigide. Cette barre centrale a pour fonction d'assurer le maintien d'une distance de sécurité suffisante entre la bicyclette et l'animal. Elle doit donc être réalisée dans un matériau suffisamment rigide pour ne pas plier sous l'effet des contraintes qui peuvent être éventuellement générées par le déplacement de la bicyclette, les mouvements de l'animal ou tout autre phénomène.

A son extrémité opposée à celle recevant l'adaptateur (1), la barre tubulaire (2) engage un support de fixation (3) permettant de la solidariser au cadre d'une bicyclette, plus particulièrement au tube vertical (A) de la selle (B) de la bicyclette.

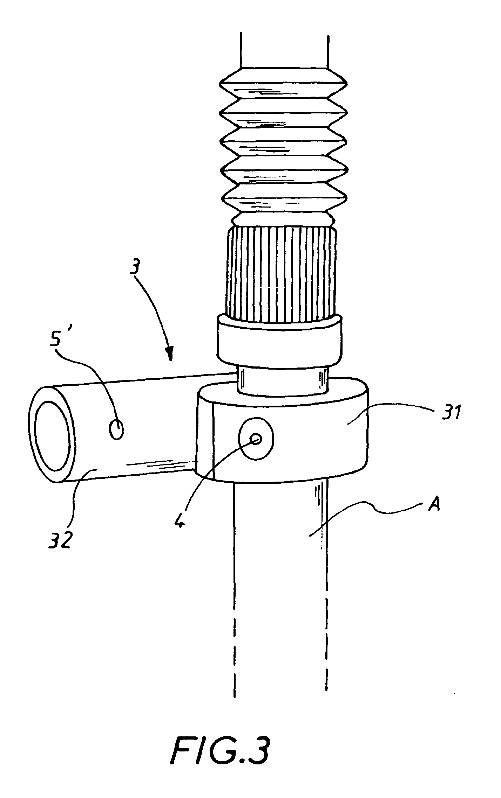

Le support de fixation (3) est constitué d'un collier de serrage (31) sous forme d'une pièce tubulaire en deux parties (31', 31"), dont l'orifice central a un diamètre qui est adapté aux dimensions standards des cadres de bicyclette, notamment des tubes de selle. Le collier (31) est prévu pour être mis en place sur le cadre de la bicyclette, de préférence sur le tube de selle (A), et sera maintenu en position par serrage des deux parties (31' et 31") qui le composent, au moyen d'une vis ou de tout autre dispositifs de serrage rapide (4), comme on le voit à la figure 3.

L'une des demi-pièces (31' et 31") formant le collier (31) est prolongée par une structure de tube soudée perpendiculairement à l'axe vertical du collier (31), et dont le diamètre intérieur est légèrement supérieur à celui de la barre tubulaire (2) pour former un manchon (32) apte à engager l'extrémité de la barre tubulaire (2) par simple coulissement. Le maintien en place de la barre tubulaire (2) dans le manchon (32) est réalisé par mise en place d'une clavette (5) qui traversera un orifice passant (5') ménagé en correspondance respectivement sur la barre tubulaire (2) et le manchon (32).

On constate ainsi que le dispositif selon l'invention est composé d'un nombre limité de pièces, qui sont peu complexes à réaliser et qui sont par ailleurs faciles à utiliser.

Concrètement, l'utilisateur pourra laisser en place le support de fixation qui n'a pas besoin d'être démonté ou retiré après chaque utilisation.

Le montage et le réglage sont effectués une fois lors de la première mise en place du dispositif, lequel n'a plus en principe à être retiré ensuite, seul le serrage devant être vérifié de temps à autre. En raison de sa petite taille et de l'emplacement où il est implanté, à savoir le tube vertical de la selle de la bicyclette, la présence du support de fixation ne représente aucune gêne pour l'utilisateur, même lorsque le dispositif complet n'est pas monté.

De même, l'adaptateur et la barre centrale n'ont pas besoin d'être désolidarisés l'un par rapport à l'autre après chaque utilisation. Là également, le montage est effectué lors de la première utilisation et seuls des réglages et des vérifications sont à effectuer ensuite.

Ainsi, l'utilisateur n'aura en tout et pour tout que deux opérations à effectuer pour utiliser le dispositif, une fois les réglages initiaux défini lors de la première utilisation. En premier lieu, il devra engager l'extrémité libre de la barre centrale dans le manchon du support de fixation déjà en place sur le cadre de la bicyclette et la bloquer en position au moyen de la clavette.

Dans un second temps, il lui suffira de mettre en place la poignée de la laisse à enrouleur dans la gorge de l'adaptateur à l'extrémité opposée de la barre tubulaire (2) et d'assurer son maintien en place en utilisant les moyens de fixations rapides prévus pour ce faire.

L'ensemble de l'opération ne prend que quelques secondes, tout comme le démontage qui ne constitue que l'opération inverse de celle décrite ci-dessus.

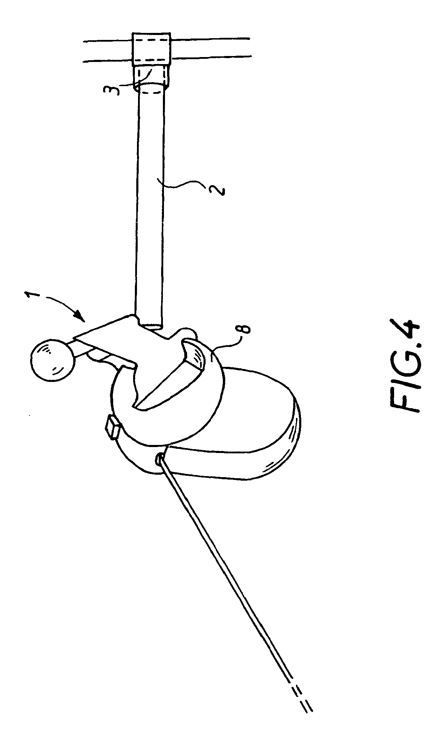

Les figures 2 à 5 représentent le positionnement et l'utilisation du dispositif selon l'invention.

La barre centrale contribue à assurer tant la rigidité de l'ensemble que le maintien d'une distance minimale de sécurité entre la bicyclette et l'animal.

Le dispositif n'est par ailleurs pas dépendant d'un type particulier de laisse et n'exige pas par ailleurs l'utilisation d'une laisse dédiée non dissociable ou non utilisable de manière indépendante, comme les dispositifs connus de l'art antérieur.

L'adaptateur prévu en extrémité permet le raccordement et la fixation de tout type de laisse à enrouleur sans qu'il soit nécessaire de les modifier.

Bien entendu, des types de laisse dédiées peuvent tout aussi bien être utilisés avec le dispositif selon l'invention. On pourra ainsi prévoir sans sortir du cadre de la présente invention d'utiliser un enrouleur de laisse comportant un orifice traversant dans la poignée, prédéfini ou réalisé ultérieurement, pour permettre une mise en place directement sur l'axe de la poignée de commande ou de la tige à boule évoquée ci-dessus.

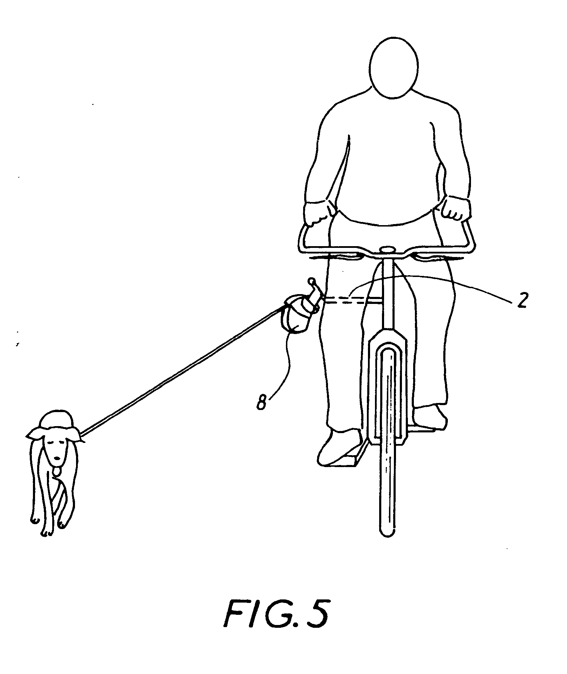

Comme on le voit à la figure 5, lors de l'utilisation, le conducteur, du fait du positionnement du dispositif, aura à portée de main la poignée de commande de la laisse et pourra donc de manière immédiate soit bloquer celle-ci pour empêcher le déroulement supplémentaire de la laisse, soit même commander l'enroulement de la laisse s'il apparaît nécessaire de réduire la distance laissée à l'animal.

Ceci peut être effectué de manière immédiate puisque le dispositif est à proximité immédiate juste sous la selle, l'utilisateur n'a pas à s'arrêter, n'a même pas à quitter la route des yeux, ni même à se pencher, ce qui compromettrait son équilibre.

Le dispositif peut sans problème être adapté à tout véhicule ou support autre qu'une bicyclette, pare exemple le cadre d'une poussette. Aucune modification structurelle ou opérationnelle n'est nécessaire.

## Revendications

1. Dispositif pour relier la laisse d'un animal domestique à un véhicule à roue non motorisé, composé d'un adaptateur (1) prévu pour recevoir la poignée (8') d'une laisse à enrouleur (8) et engagé sur une des extrémités d'une barre tubulaire (2), l'autre extrémité de la barre (2) engageant un support de fixation (3) monté sur le cadre d'une bicyclette, **caractérisé en ce que** l'adaptateur (1) comprend un ensemble de serrage comportant un élément récepteur (10) dont l'une des extrémités est repliée pour former une gorge (15) en forme de U pour engager la poignée (8') d'un enrouleur de laisse (8), et une pièce tubulaire (11) de diamètre 10 légèrement supérieur à celui de la barre centrale (2), comportant à une de ses extrémités une tige saillante (13) pouvant être accouplée de manière libératoire à l'ensemble de serrage

2. Dispositif selon la revendication 1, **caractérisé en ce que** la tige saillante (13) forme un angle d'environ 45° avec l'axe longitudinal de la pièce tubulaire (11) et comporte un filetage extérieur (13').

3. Dispositif selon la revendication 1 ou la revendication 2, **caractérisé en ce que** l'élément récepteur (10) comporte une partie centrale définie par une plaque plane (14), dont l'une des extrémités se prolonge par un tube ouvert (16) doté d'un filetage intérieur correspondant au filetage extérieur (13') de la tige (13), l'autre extrémité de la plaque (14) formant la gorge (15).

4. Dispositif selon l'une des revendications précédentes, **caractérisé en ce que** le maintien en position, respectivement le retrait, de la pièce tubulaire (11) une fois celle-ci en place sur l'extrémité de la barre tubulaire (2) est assuré par des moyens d'accouplement/désaccouplement rapide.

5. Dispositif selon l'une des revendications précédentes, **caractérisé en ce que** la barre tubulaire (2) peut être réalisée en métal ou en tout autre matériau rigide.

6. Dispositif selon l'une des revendications précédentes, **caractérisé en ce que** le support de fixation (3) est constitué d'un collier de serrage (31) prolongé par une structure de tube soudée perpendiculairement à luxe veritical du collier (31), dont le diamètre intérieur est légèrement supérieur à celui de la barre tubulaire (2) pour former un manchon (32) apte à engager l'extrémité de la barre tubulaire (2) par coulissement.

7. Dispositif selon la revendication 6, **caractérisé en ce que** le maintien en place de la barre tubulaire (2) dans le manchon (32) est réalisé par une clavette (5) traversant un orifice passant (5') ménagé en correspondance respectivement sur la barre tubulaire (2) et le manchon (32).

## Claims

1. Device to attach a pet leash to a non-motorised wheeled vehicle, comprised of an adapter (1) provided to receive the handle (8') of a retractable leash (8) and engaged on one of the ends of a tubular bar (2), the other end of the bar (2) engaging a fixation support (3) mounted on the frame of a bicycle, **characterised in that** the adapter (1) comprises a lock assembly comprising a receiving element (10) one of whose ends is folded to form a U-shaped groove (15) for engaging the handle (8') of the leash retractor (8), and a tubular part (11) with a diameter which is slightly greater than that of the central bar (2), comprising at one of its ends a projecting rod (13) able to be coupled in a discharge manner to the lock assembly.

2. Device according to claim 1, **characterized in that** the projecting rod (13) forms an angle of 45° with the longitudinal axis of the tubular part (11) and comprises an external threading (13').

3. Device according to claim 1 or claim 2, **characterized in that** the receiving element (10) comprises a central part defined by a flat plate (14), one of the ends of which is extended by an open tube (16) with an internal threading corresponding to the external threading (13') of the rod (13), the other end of the plate (14) forming the groove (15).

4. Device according to one of the previous claims, **characterized in that** holding the tubular part (11) in position, respectively withdrawing it, once it is in place on the end of the tubular bar (2) is performed by quick coupling/uncoupling means.

5. Device according to one of the previous claims, **characterized in that** the tubular bar (2) can be made of metal or any other rigid material.

6. Device according to one of the previous claims, **characterized in that** the fixation support (3) is made up of a clamping ring (31) extended by a tube structure welded perpendicularly to the vertical axis of the ring (31), the inside diameter of which is slightly greater than that of the tubular bar (2) to form a sleeve (32) able to engage the end of the tubular bar (2) in a sliding manner.

7. Device according to claim 6, **characterized in that** holding the tubular bar (2) in place in the sleeve (32) is performed by a locking key (5) crossing a through hole (5') arranged in a corresponding manner respectively on the tubular bar (2) and the sleeve (32).

## Patentansprüche

1. Vorrichtung für die Verbindung der Leine eines Haustieres mit einem antriebslosen Radfahrzeug, bestehend aus einem für die Aufnahme des Griffes (8') einer Rollleine (8) vorgesehenen und auf dem einen Ende einer Rohrstange (2) befestigten Adapter (1), wobei auf dem anderen Ende der Stange (2) ein am Rahmen eines Fahrrads montierter Befestigungshalter (3) aufgesteckt ist, **dadurch gekennzeichnet, dass** der Adapter (1) eine Klemmvorrichtung umfasst, die ein Aufnahmeelement (10) aufweist, von dem eines der Enden umgebogen ist, so dass eine U-förmige Rinne (15) entsteht, die den Griff (8') einer Rollleine (8) aufnimmt, und ein Rohrteil (11) mit einem etwas größeren Durchmesser als demjenigen der Mittelstange (2), das an einem Ende einen hervorstehenden Stab (13) aufweist, der auf lösbare Weise an die Klemmvorrichtung angekoppelt werden kann.

2. Vorrichtung nach Anspruch 1, **dadurch gekennzeichnet, dass** der hervorstehende Stab (13) einen Winkel von ca. 45° zur Längsachse des Rohrteils (11) bildet und ein Außengewinde (13') aufweist.

3. Vorrichtung nach Anspruch 1 oder Anspruch 2, **dadurch gekennzeichnet, dass** das Aufnahmeelement (10) einen von einer flachen Platte (14) gebildeten Mittelteil aufweist, von dem ein Ende mit einem offenen Rohr (16) verlängert wird, das mit einem Innengewinde versehen ist, welches dem Außengewinde (13') des Stabs (13) entspricht, wobei das andere Ende der Platte (14) die Rinne (15) bildet.

4. Vorrichtung nach einem der vorausgehenden Ansprüche, **dadurch gekennzeichnet, dass** die Position bzw. die Entfernung des auf dem Ende der Rohrstange (2) positionierten Rohrteils (11) durch Schnellkupplungs- und Schnellentkupplungsvorrichtungen beibehalten wird.

5. Vorrichtung nach einem der vorausgehenden Ansprüche, dadurch gekenntzeichnet, dass die Rohrstange (2) aus Metall oder einem beliebigen anderen steifen Material ausgeführt werden kann.

6. Vorrichtung nach einem der vorausgehenden Ansprüche, **dadurch gekennzeichnet, dass** der Befestigungshalter (3) aus einem Klemmring (31) besteht, der durch eine senkrecht zur Vertikalachse des Klemmrings (31) angeschweißte Rohrstruktur verlängert wird, deren Innendurchmesser etwas größer als derjenige der Rohrstange (2) ist, so dass eine Muffe (32) gebildet wird, die auf das Ende der Rohrstange (2) aufgeschoben werden kann.

7. Vorrichtung nach Anspruch 6, **dadurch gekennzeichnet, dass** die Befestigung der Rohrstange (2) in der Muffe (32) durch einen Befestigungsstift (5) erfolgt, der durch ein Durchgangsloch (5') geht, das auf der Rohrstange (2) und der Muffe (32) jeweils entsprechend ausgeführt wurde.
